# EUROPEAN PATENT APPLICATION

(11) **EP 4 645 424 A1**
(43) Date of publication of application: **05.11.2025**
(21) Application number: 24875632.2
(22) Date of filing: 08.03.2024
(51) Int. Cl.: H01M 4/131, H01M 4/36, H01M 4/62

(54) **POSITIVE ELECTRODE SHEET, SECONDARY BATTERY, AND ELECTRIC DEVICE**

(71) Applicant: Contemporary Amperex Technology (Hong Kong) Limited, Central (HK)
(72) Inventor: LIU, Huanji, Ningde, Fujian 352100 (CN); LIN, Kui, Ningde, Fujian 352100 (CN); XIE, Haotian, Ningde, Fujian 352100 (CN); CHEN, Xiao, Ningde, Fujian 352100 (CN); SUN, Xin, Ningde, Fujian 352100 (CN)
(74) Representative: Jacob, Reuben Ellis
(86) International application number: PCT/CN2024/080727
(87) International publication number: WO 2025/184893

(57) **Abstract**

This application relates to a positive electrode plate, a secondary battery, and an electrical device. The positive electrode plate includes a positive active material layer. The positive active material layer includes a first positive active material and a second positive active material. The first positive active material and the second positive active material each independently include a lithium-containing transition metal oxide. An outer surface of the second positive active material includes a passivation layer; and/or an average particle diameter Dᵥ₅₀ of the second positive active material is greater than an average particle diameter Dᵥ₅₀ of the first positive active material. The positive electrode plate endows the secondary battery with a relatively high cycle life.

## Description

### TECHNICAL FIELD

This application relates to the technical field of secondary batteries, and in particular, to a positive electrode plate, a secondary battery, and an electrical device.

### BACKGROUND

The description in the background section merely provides background information related to this application, but does not necessarily constitute prior art or related art.

In recent years, secondary batteries have been applied in a wider range of fields, including energy storage power systems such as hydro, thermal, wind, and solar power stations, and other fields such as electric tools, electric bicycles, electric motorcycles, and electric vehicles.

The significant development of the secondary batteries gives rise to higher requirements on the cycle life of the batteries. Therefore, seeking a secondary battery of a relatively long cycle life is one of the focuses of attention of those skilled in the art.

### SUMMARY

This application is developed in view of the above subject-matter. One of the objectives of this application is to provide a positive electrode plate that endows a secondary battery with a relatively high cycle life.

To achieve the above objective, a first aspect of this application provides a positive electrode plate. The positive electrode plate includes a positive active material layer. The positive active material layer includes a first positive active material and a second positive active material. The first positive active material and the second positive active material each independently include a lithium-containing transition metal oxide.

An outer surface of the second positive active material includes a passivation layer; and/or an average particle diameter Dᵥ₅₀ of the second positive active material is greater than an average particle diameter Dᵥ₅₀ of the first positive active material.

In the positive electrode plate of this application, the first positive active material and the second positive active material each independently include a lithium-containing transition metal oxide, and the outer surface of the second positive active material includes a passivation layer, and/or the average particle diameter Dᵥ₅₀ of the second positive active material is greater than the average particle diameter Dᵥ₅₀ of the first positive active material. The passivation layer on the outer surface of the second positive active material can passivate the second positive active material. In this way, the first-cycle gravimetric discharge capacity of the second positive active material is reduced. During cycling of the battery, the passivation layer on the surface of the second positive active material ruptures gradually, so that the capacity of the second positive active material is gradually recovered and released, thereby producing a self-lithiation effect, slowing down the cycle capacity fading, and increasing the cycle life of the secondary battery.

Similarly, the average particle diameter Dᵥ₅₀ of the second positive active material is larger than that of the first positive active material. Due to the large particle diameter, the specific surface area is relatively small accordingly, thereby reducing the active sites exposed in an electrolyte solution. This can also passivate the second positive active material, and reduce the first-cycle gravimetric discharge capacity of the second positive active material. During cycling of the battery, the second positive active material incurs cracks gradually, so that more active sites are exposed gradually. In this way, the capacity of the second positive active material is recovered and released gradually, thereby also producing a self-lithiation effect, slowing down the cycle capacity fading of the secondary battery, and increasing the cycle life.

In any embodiment, the first positive active material and the second positive active material each independently include one or more of lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide.

In any embodiment, the first positive active material and the second positive active material each are one or more selected from lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide. In this way, the first positive active material and the second positive active material are made of the same type of material, thereby reducing the adverse effects caused by the mixing of different types of positive active materials to performance metrics (such as safety, reliability, storage performance, and energy density) other than the cycle life of the secondary battery.

In any embodiment, both the first positive active material and the second positive active material are lithium iron phosphate.

In any embodiment, the molecular formula of the first positive active material is identical to that of the second positive active material. In this way, the adverse effects on the performance metrics other than the cycle life of the battery can be further alleviated.

In any embodiment, the passivation layer includes one or more of an oxide passivation layer or a nitride passivation layer. The passivation layer can passivate the surface of the positive active material effectively.

In any embodiment, the passivation layer includes one or more of an aluminum oxide layer, a zirconium oxide layer, a titanium oxide layer, or a titanium nitride layer.

In any embodiment, a thickness of the passivation layer is 1 nm to 50 nm. In this way, a good passivation effect is produced. At the same time, the capacity of the active material inside the passivation layer can be well released during subsequent cycling.

In any embodiment, the thickness of the passivation layer is 3 nm to 10 nm.

In any embodiment, a ratio of the average particle diameter Dᵥ₅₀ of the second positive active material to the average particle diameter Dᵥ₅₀ of the first positive active material is 2 to 18. In this way, the second positive active material can be passivated effectively, and the capacity of the active material can be released effectively during cycling.

In any embodiment, both the first positive active material and the second positive active material are lithium iron phosphate. The average particle diameter Dᵥ₅₀ of the first positive active material is 0.5 µm to 3 µm, and the average particle diameter Dᵥ₅₀ of the second positive active material is 1.5 µm to 9 µm.

In any embodiment, both the first positive active material and the second positive active material are a nickel-cobalt-manganese ternary material that is morphologically single crystal particles. The average particle diameter Dᵥ₅₀ of the first positive active material is 3 µm to 7 µm, and the average particle diameter Dᵥ₅₀ of the second positive active material is 9 µm to 21 µm.

In any embodiment, both the first positive active material and the second positive active material are a nickel-cobalt-manganese ternary material that is morphologically polycrystalline particles. The average particle diameter Dᵥ₅₀ of the first positive active material is 8 µm to 20 µm, and the average particle diameter Dᵥ₅₀ of the second positive active material is 20 µm to 40 µm.

In any embodiment, a first-cycle gravimetric discharge capacity of the first positive active material is C₁, and a first-cycle gravimetric discharge capacity of the second positive active material is C₂. Based on a total mass of the positive active material layer, a mass fraction of the first positive active material is W₁, and a mass fraction of the second positive active material is W₂. The positive electrode plate satisfies: C₁ × W₁ + C₂ × W₂ = k × C₁ × (W₁ + W₂), where 0.8 ≤ k < 1. In this way, the direct-current resistance DCR of the battery is made to be relatively low while the cycle life of the battery is increased effectively.

In any embodiment, 0.9 ≤ k ≤ 0.97. In this way, a better balance is achieved between the cycle life and the direct-current resistance of the battery, and the secondary battery is endowed with higher overall performance.

In any embodiment, 12% ≤ W₁ < 100%, and 0% < W₂ ≤ 85%. In this way, the direct-current resistance of the battery is made to be relatively low while the cycle life of the battery is increased effectively.

In any embodiment, 60% ≤ W₁ < 100%, and 0% < W₂ ≤ 40%. In this way, the direct current resistance of the battery is reduced more favorably, and a better balance is achieved between the cycle life and the direct current resistance of the battery.

In any embodiment, the positive active material layer includes the first positive active material and the second positive active material mixed with each other. In this way, a single-layer positive active material layer containing both the first positive active material and the second positive active material is formed, and the coating process is relatively simple.

In any embodiment, the positive active material layer includes a first positive active material layer and a second positive active material layer stacked together. The first positive active material layer includes the first positive active material, and the second positive active material layer includes the second positive active material. In this way, a stacked-type positive active material layer with two layers containing the first positive active material and the second positive active material respectively is formed, so that the capacity of the active material can be exerted more favorably.

A second aspect of this application further provides a secondary battery. The secondary battery includes the positive electrode plate according to the first aspect of this application.

A third aspect of this application further provides an electrical device. The electrical device includes the secondary battery according to the second aspect of this application.

The details of one or more embodiments of this application are set forth in the drawings and description below. Other features, objectives, and advantages of this application will become evident in the specification, drawings, and claims.

### BRIEF DESCRIPTION OF DRAWINGS

In order to more clearly describe and illustrate some embodiments or examples of this application, reference may be made to one or more drawings. Additional details or examples used to describe the drawings are not to be considered as any limitation on the scope of any one of the application disclosed herein, an embodiment or example currently being described, or a preferred implementation of this application currently being understood. In all the drawings, the same reference numeral represents the same component. In the drawings:
FIG. 1 shows capacity fading curves of a secondary battery in which a positive active material is entirely lithium iron phosphate, and a secondary battery in which a positive active material is partly lithium iron phosphate and partly passivated lithium iron phosphate, respectively;
FIG. 2 is a schematic diagram of a positive electrode plate according to an embodiment of this application;
FIG. 3 is a schematic diagram of a positive electrode plate according to another embodiment of this application;
FIG. 4 is a schematic diagram of a positive electrode plate according to another embodiment of this application;
FIG. 5 is a schematic diagram of a battery cell according to an embodiment of this application;
FIG. 6 is an exploded view of the battery cell shown in FIG. 5 according to an embodiment of this application; and
FIG. 7 is a schematic diagram of an electrical device that uses a secondary battery as a power supply according to an embodiment of this application.

List of reference numerals:
1. positive electrode plate; 11. first positive active material; 12. second positive active material; 13. positive current collector; 121. passivation layer; 5. battery cell; 51. housing; 52. electrode assembly; 53. cover plate; 6. electrical device.

### DETAILED DESCRIPTION OF EMBODIMENTS

The following describes in detail a positive electrode plate, a secondary battery, and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein may be defined in the form of a lower limit and an upper limit. A given range is defined by a lower limit and an upper limit selected. The selected lower and upper limits define the boundaries of a particular range. A range so defined may be inclusive or exclusive of the end values. Any end value may be independently included or excluded, and may be arbitrarily combined. In other words, a lower limit of any range may be arbitrarily combined with an upper limit of another range to form a range. For example, if a range of 60 to 120 and a range of 80 to 110 are set out for a given parameter, it is expectable that such ranges may be understood as 60 to 110 and 80 to 120. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to an enumeration that the parameter is an integer such as 2, 3, 4, 5, 6, 7, 8, 9, 10, 11, 12, and so on. For example, a statement that a parameter is an integer selected from 2 to 10 is equivalent to reciting integers 2, 3, 4, 5, 6, 7, 8, 9, and 10.

Unless otherwise expressly defined, references to "a plurality of", "multiple", and the like herein mean that the number is greater than 2 or equal to 2. For example, "one or more" means one, or greater than or equal to two.

Unless otherwise expressly specified herein, any embodiments and optional embodiments hereof may be combined with each other to form a new technical solution.

Reference to an "embodiment" herein means that a specific feature, structure or characteristic described with reference to this embodiment may be included in at least one embodiment or implementation of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments. References to "implementation" herein are to be understood similarly.

A person skilled in the art understands that, in the methods described in each implementation or embodiment, the order in which the steps are described herein does not necessarily mean a strict order of performing the steps, and does not constitute any limitation on the implementation process. The detailed order in which the steps are to be performed needs to be determined based on the functions and possible internal logic of the steps. Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

In this application, unless otherwise specified, an open-ended enumeration of technical features or technical solutions preceded by the terms such as "contain", "include", "comprise", and the like does not exclude additional members other than the recited members, but is deemed to provide not only a closed-ended enumeration of features or technical solutions consisting of the recited members, but also an open-ended enumeration of features or technical solutions consisting of additional members other than the recited members. For example, unless otherwise specified, if A includes a1, a2, and a3, A may further include other additional members, or may include no additional members, and it is deemed that the enumeration not only provides the feature or technical solution in which "A includes a1, a2, and a3", but also provides the feature or technical solution in which "A includes other members in addition to a1, a2, and a3". In this application, unless otherwise specified, A (such as B) means that B is a non-limiting example of A, and it is understood that A is not limited to B.

In this application, "optionally" and "optional" mean presence or absence of the related item, that is, indicate any one of two parallel technical solutions "with" or "without" the related item. Unless otherwise expressly specified, if "optional" is used repeatedly in one technical solution, each "optional" is independent to the extent that no contradiction or mutual constraint occurs.

Currently, the significant development of secondary batteries gives rise to higher requirements on the cycle life of the secondary batteries. How to increase the cycle life of secondary batteries has become one of important research topics in this field. In view of the above situation, this application improves a positive electrode plate to effectively increase the cycle life of a secondary battery containing the positive electrode plate.

In some embodiments, a first aspect of this application provides a positive electrode plate 1. The positive electrode plate 1 includes a positive active material layer. The positive active material layer includes a first positive active material 11 and a second positive active material 12. The first positive active material 11 and the second positive active material 12 each independently include a lithium-containing transition metal oxide. In addition, an outer surface of the second positive active material 12 includes a passivation layer 121; and/or an average particle diameter Dᵥ₅₀ of the second positive active material 12 is greater than an average particle diameter Dᵥ₅₀ of the first positive active material 11.

In the positive electrode plate 1 of this application, the first positive active material 11 and the second positive active material 12 each independently include a lithium-containing transition metal oxide, and the outer surface of the second positive active material 12 includes a passivation layer 121, and/or the average particle diameter Dᵥ₅₀ of the second positive active material 12 is greater than the average particle diameter Dᵥ₅₀ of the first positive active material 11. The passivation layer 121 on the outer surface of the second positive active material 12 can passivate the second positive active material 12. In this way, the first-cycle gravimetric discharge capacity of the second positive active material 12 is reduced. During cycling of the battery, the passivation layer 121 on the surface of the second positive active material 12 ruptures gradually, so that the capacity of the second positive active material 12 is gradually recovered and released, thereby producing a self-lithiation effect, slowing down the cycle capacity fading, and increasing the cycle life of the secondary battery.

Similarly, the average particle diameter Dᵥ₅₀ of the second positive active material 12 is larger than that of the first positive active material 11. Due to the large particle diameter, the specific surface area is relatively small accordingly, thereby reducing the active sites exposed in an electrolyte solution. This can also passivate the second positive active material 12, and reduce the first-cycle gravimetric discharge capacity of the second positive active material 12. During cycling of the battery, the second positive active material 12 incurs cracks gradually, so that more active sites are exposed gradually. In this way, the capacity of the second positive active material 12 is recovered and released gradually, thereby also producing a self-lithiation effect, slowing down the cycle capacity fading of the secondary battery, and increasing the cycle life.

It is hereby noted that the second positive active material 12 with a passivation layer 121 included in the outer surface does conflict with the second positive active material 12 of a relatively large particle diameter, and the two schemes can be used concurrently. In other words, the positive active material layer may contain either the second positive active material 12 with a passivation layer 121 or the second positive active material 12 of a large particle diameter, or may contain both the second positive active material 12 with a passivation layer 121 and the second positive active material 12 of a large particle diameter. In some cases, the two passivation methods, that is, coating passivation and large-particle-diameter passivation, may be combined. To be specific, the surface of the second positive active material 12 of a large particle diameter is coated with a passivation layer 121.

Understandably, the first-cycle gravimetric discharge capacity means a capacity per unit mass of positive active material at the end of discharge in a first cycle, measured in mAh/g.

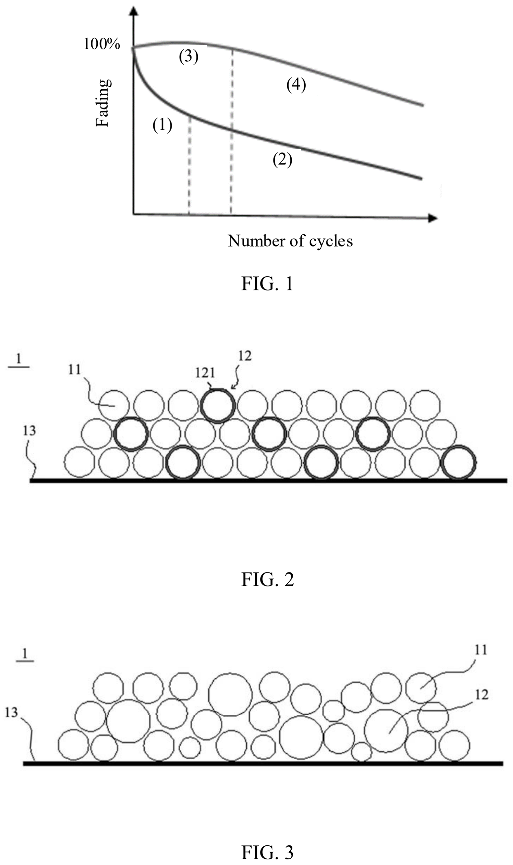

FIG. 1 is a schematic diagram of capacity fading curves of a secondary battery in which a positive active material is entirely lithium iron phosphate, and a secondary battery in which a positive active material is partly lithium iron phosphate and partly lithium iron phosphate with a surface containing a passivation layer 121, respectively, in a positive active material layer. In FIG. 1, the curve indicated by (1) and (2) is a capacity fading curve of a secondary battery in which the positive active material is entirely lithium iron phosphate after cycling; and the curve indicated by (3) and (4) is a capacity fading curve of a secondary battery in which the positive active material is partly lithium iron phosphate and partly lithium iron phosphate with a surface containing a passivation layer 121. As can be seen from FIG. 1, in an initial segment of a cycle capacity curve of the secondary battery in which the positive active material is entirely lithium iron phosphate, as shown in the curve segment (1), the capacity fades quickly, and then the capacity fades slowly, as shown in the curve segment (2). In an initial cycling segment of a cycle capacity curve of the secondary battery in which the positive active material is partly lithium iron phosphate and partly lithium iron phosphate with a surface containing a passivation layer 121, the passivated material is activated slowly, and lithium ions are released continuously to form an activation curve segment (3). After completion of the activation, the capacity fades normally, as shown in the curve segment (4). The cycle life of the secondary battery is greatly improved compared with the secondary battery that exhibits the curve segments (1) and (2).

In some embodiments, the first positive active material 11 and the second positive active material 12 each independently include one or more of lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide.

In some embodiments, the first positive active material 11 and the second positive active material 12 each are one or more selected from lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide. In this way, the first positive active material 11 and the second positive active material 12 are made of the same type of material, thereby reducing the adverse effects caused by the mixing of different types of positive active materials to performance metrics (such as safety, reliability, storage performance, and energy density) other than the cycle life of the secondary battery.

In some specific examples, both the first positive active material 11 and the second positive active material 12 are lithium iron phosphate.

In some specific examples, the molecular formula of the second positive active material 12 is identical to that of the first positive active material 11. The positive active material in which the second positive active material 12 and the first positive active material 11 are represented by the same molecular formula can further alleviate the adverse effects on the performance metrics other than the cycle life of the battery. Further, the first positive active material 11 may be lithium iron phosphate; and the second positive active material 12 may be lithium iron phosphate with a surface containing a passivation layer 121, or may be lithium iron phosphate with an average particle diameter Dᵥ₅₀ larger than that of the first positive active material 11, or may be a mixture thereof.

It is hereby noted that, when the second positive active material 12 is a positive active material with a surface containing a passivation layer 121, the molecular formula of the second positive active material 12 means the molecular formula of the positive active material coated in the passivation layer 121.

In some embodiments, the positive electrode plate 1 may further include a positive current collector 13. The positive active material layer is disposed on at least one surface of the positive current collector 13.

Referring to FIG. 2, in some embodiments, the second positive active material 12 is a positive active material with a surface coated with a passivation layer 121. To be specific, the passivation is performed by coating the surface of the positive active material with a passivation layer 121, thereby forming the second positive active material 12. By coating the surface with the passivation layer 121, the first-cycle gravimetric discharge capacity of the second positive active material 12 can be reduced relative to the first-cycle gravimetric discharge capacity of the pre-passivation positive active material. In addition, during cycling of the secondary battery, the passivation layer 121 is activated gradually, and releases the capacity slowly to produce a self-lithiation effect, thereby increasing the cycle life of the secondary battery.

In some embodiments, the passivation layer 121 may be one or more of an oxide passivation layer or a nitride passivation layer. Specifically, the passivation layer 121 may be one or more of an aluminum oxide layer, a zirconium oxide layer, a titanium oxide layer, or a titanium nitride layer. The passivation layer 121 can passivate the surface of the positive active material effectively.

The passivation layer 121 may be formed by wet coating or atomic layer deposition (ALD) or other means. Specifically, in some embodiments, in a process of forming a passivation layer 121 by wet coating, the positive active material is dispersed in a buffer solution of a specified pH value, and sonicated for a period of time to make the material dispersed evenly. Subsequently, a passivation material solution is added, and the mixture is heated, filtered, washed, and oven-dried, and then calcined at 400 °C for 2 hours in a nitrogen atmosphere by using a controlled atmosphere furnace, so as to obtain a second positive active material 12 with a surface coated with a passivation layer 121. The buffer solution may be a formic acid-ammonium formate buffer solution with a pH value of 3.8 to 4.5. The passivation material solution may be a salt solution such as aluminum sulfate. Aluminum sulfate can provide an aluminum donor, so that aluminum hydroxide is precipitated in the buffer solution to form an aluminum oxide coating layer after being sintered.

It is hereby noted that, when the passivation layer 121 is prepared by atomic layer deposition, because the density of the passivation layer 121 is relatively high, the passivation layer 121 is difficult to rupture during cycling of the battery. Therefore, the thickness of the passivation layer 121 needs to be set to a relatively small value, typically 2 nm or so.

In some embodiments, the thickness of the passivation layer 121 is 1 nm to 50 nm. The thickness of the passivation layer 121 covering the surface of the second positive active material 12 affects the passivation effect of the positive active material and the effect of the passivation layer 121 rupturing and releasing the capacity during cycling of the battery. By controlling the thickness of the passivation layer 121 on the surface of the second positive active material 12 to fall within the above range, a good passivation effect is produced. At the same time, the capacity of the active material inside the passivation layer 121 can be well released during subsequent cycling.

Understandably, the thickness of the passivation layer 121 on the surface of the second positive active material 12 may be 1 nm, 2 nm, 5 nm, 8 nm, 10 nm, 12 nm, 15 nm, 18 nm, 20 nm, 22 nm, 25 nm, 28 nm, 30 nm, 32 nm, 35 nm, 38 nm, 40 nm, 42 nm, 45 nm, 48 nm, 50 nm, or any value falling within a range formed by any two thereof.

In some embodiments, the thickness of the passivation layer 121 is 3 nm to 10 nm. By controlling the thickness of the passivation layer 121 on the surface of the second positive active material 12 to fall within the above range, a good passivation effect is produced. At the same time, the capacity of the active material inside the passivation layer 121 can be released more sufficiently during cycling.

Referring to FIG. 3, in some embodiments, the molecular formula of the second positive active material 12 is identical to that of the first positive active material 11. The particle diameter of the second positive active material 12 is larger than that of the first positive active material 11. To be specific, the first positive active material 11 and the second positive active material 12 are the same type of positive active material. The same type of positive active material with a larger particle diameter than the first positive active material 11 is used as the second positive active material 12. Due to the larger particle diameter, the specific surface area is smaller accordingly, thereby reducing the active sites of the second positive active material that are exposed in the electrolyte solution. During cycling, the second positive active material 12 expands and shrinks. The second positive active material 12 incurs cracks in the places where the particles are relatively large, thereby exposing more active sites and releasing the capacity, and in turn, increasing the cycle life of the secondary battery.

It is hereby noted that the second positive active material 12 with a larger particle diameter than the first positive active material 11 may be obtained by increasing the particle diameter of a precursor used in preparing the positive active material, or obtained by performing secondary sintering for the first positive active material 11.

In some embodiments, a ratio of the average particle diameter Dᵥ₅₀ of the second positive active material 12 to the average particle diameter Dᵥ₅₀ of the first positive active material 11 is 2 to 18. By controlling the ratio of the average particle diameter Dᵥ₅₀ between the second positive active material 12 and the first positive active material 11 to fall within the above range, the second positive active material 12 can be passivated effectively, and the capacity of the active material can be released effectively during cycling. Understandably, the ratio of the average particle diameter Dᵥ₅₀ between the second positive active material 12 and the first positive active material 11 may be 2, 3, 4, 5, 6, 7, 8, 9, 10, 11, 12, 13, 14, 15, 16, 17, 18, or any value falling within a range formed by any two thereof.

In some specific examples, both the first positive active material 11 and the second positive active material 12 are lithium iron phosphate. The average particle diameter Dᵥ₅₀ of the first positive active material 11 is 0.5 µm to 3 µm, and the average particle diameter Dᵥ₅₀ of the second positive active material 12 is 1.5 µm to 9 µm.

In some specific embodiments, both the first positive active material 11 and the second positive active material 12 are a nickel-cobalt-manganese ternary material that is morphologically single crystal particles. The average particle diameter Dᵥ₅₀ of the first positive active material 11 is 3 µm to 7 µm, and the average particle diameter Dᵥ₅₀ of the second positive active material 12 is 9 µm to 21 µm.

In some specific embodiments, both the first positive active material 11 and the second positive active material 12 are a nickel-cobalt-manganese ternary material that is morphologically polycrystalline particles. The average particle diameter Dᵥ₅₀ of the first positive active material 11 is 8 µm to 20 µm, and the average particle diameter Dᵥ₅₀ of the second positive active material 12 is 20 µm to 40 µm.

In some embodiments, the first-cycle gravimetric discharge capacity of the first positive active material 11 is C₁, measured in mAh/g; and the first-cycle gravimetric discharge capacity of the second positive active material 12 is C₂, measured in mAh/g. Based on the total mass of the positive active material layer, the mass fraction of the first positive active material 11 is W₁, and the mass fraction of the second positive active material 12 is W₂. The positive electrode plate 1 satisfies: C₁ × W₁ + C₂ × W₂ = k × C₁ × (W₁ + W₂), where 0.8 ≤ k < 1.

In the above relational expression, k represents a percentage of the capacity of the electrode plate that employs both the first positive active material 11 and the second positive active material 12 in relation to the capacity of the electrode plate that employs the first positive active material 11 alone. C₁×W₁+C₂×W₂ represents a weighted capacity of the first positive active material 11 and the second positive active material 12. C₁×(W₁+W₂) represents the capacity of the electrode plate that employs the first positive active material 11 alone.

When the total mass of the positive active material in the positive active material layer remains unchanged, the capacity of the electrode plate doped with the second positive active material 12 at a specified mass percent decreases to some extent. An appropriate mass percent of the second positive active material 12 is controlled by making the positive electrode plate 1 satisfy the relational expression C₁ × W₁ + C₂ × W₂ = k × C₁ × (W₁ + W₂), where 0.8 ≤ k < 1, the direct-current resistance of the battery is made to be relatively low while the cycle life of the battery is increased effectively.

Understandably, in the above relational expression, the value of k may be 0.8, 0.81, 0.82, 0.83, 0.84, 0.85, 0.86, 0.87, 0.88, 0.89, 0.9, 0.91, 0.92, 0.93, 0.94, 0.95, 0.96, 0.97, 0.98, 0.99, or any value falling within a range formed by any two thereof.

In some embodiments, 0.9 ≤ k ≤ 0.97. In this way, the direct-current resistance of the secondary battery is made lower while the cycle life of the secondary battery is further increased. A better balance is achieved between the cycle life and the direct-current resistance of the battery, and the secondary battery is endowed with higher overall performance.

In some embodiments, 12% ≤ W₁ < 100%, and 0% < W₂ ≤ 85%. In this way, the direct-current resistance of the battery is made to be relatively low while the cycle life of the battery is increased effectively. Understandably, the mass fraction W₁ of the first positive active material 11 may be 12%, 15%, 20%, 25%, 30%, 35%, 40%, 45%, 50%, 55%, 60%, 62%, 65%, 68%, 70%, 72%, 75%, 78%, 80%, 82%, 85%, 88%, 90%, 92%, 95%, 98%, 99%, or any value falling within a range formed by any two thereof. The mass fraction W₂ of the second positive active material 12 may be 1%, 2%, 5%, 8%, 10%, 12%, 15%, 18%, 20%, 22%, 25%, 28%, 30%, 32%, 35%, 38%, 40%, 45%, 50%, 55%, 60%, 65%, 70%, 75%, 80%, 85%, or any value falling within a range formed by any two thereof.

In some embodiments, 60% ≤ W₁ < 100%, and 0% < W₂ ≤ 40%. Controlling W₁ and W₂ to fall within the above range can further reduce the direct-current resistance of the battery while effectively increasing the cycle life of the battery, and make it easier to release and recover the capacity of the positive active material during subsequent cycling.

It is hereby noted that, in the positive active material layer, the first positive active material 11 may be mixed with the second positive active material 12 to form a single-layer structure in which the first positive active material 11 and the second positive active material 12 are uniformly distributed; or, the first positive active material 11 and the second positive active material 12 may be separated as two layers to form a stacked structure.

Referring to FIG. 2 and FIG. 3, in some embodiments, the first positive active material 11 and the second positive active material 12 in the positive active material layer are mixed with each other. In other words, the first positive active material 11 is mixed with the second positive active material 12 to form a single-layer positive active material layer in which the first positive active material 11 and the second positive active material 12 are uniformly distributed.

Specifically, the single-layer positive active material layer may be formed by mixing the first positive active material 11 and the second positive active material 12 in a positive electrode slurry and coating a positive current collector 13 with the slurry. The coating process of the positive electrode slurry is relatively simple.

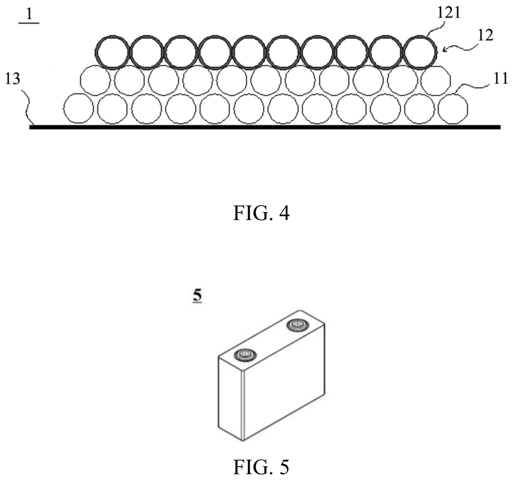

Referring to FIG. 4, in some embodiments, the positive active material layer includes a first positive active material layer and a second positive active material layer stacked together. The first positive active material layer includes the first positive active material 11, and the second positive active material layer includes the second positive active material 12. In this way, the first positive active material 11 and the second positive active material 12 are located in different layers separately.

Specifically, the stacked-type positive active material layer may be formed by layered coating. To be specific, first, the positive current collector 13 is coated with a positive electrode slurry containing one type of positive active material to form a first positive active material layer; and then the first positive active material layer is coated with a positive electrode slurry containing another type of positive active material to form a second positive active material layer. Although the coating process of the stacked-type positive active material layer prepared by the layered coating process is relatively complicated, a conductive network formed by the first positive active material 11 is prevented from being adversely affected by the passivation of the second positive active material 12, and the capacity is exerted more sufficiently than the single-layer positive active material layer.

It is hereby noted that, in the stacked-type positive active material layer, the number of single-layer active material layers is not limited, but is not so excessive that the coating process is made much more difficult. The order between the first positive active material layer and the second positive active material layer is not limited in disposing the layers. The first positive active material layer may be applied before the second positive active material layer; or, the second positive active material layer may be applied before the first positive active material layer; or, the first positive active material layer and the second positive active material layer may be applied alternately.

In some embodiments, a second aspect of this application provides a secondary battery. The secondary battery includes the positive electrode plate 1 according to the first aspect of this application. By employing the positive electrode plate 1 according to the first aspect of this application, the secondary battery of this application is endowed with a relatively long cycle life. Understandably, the secondary battery may further include a negative electrode plate, a separator, an electrolyte solution, and the like.

In some embodiments, a third aspect of this application provides an electrical device. The electrical device includes the secondary battery according to the second aspect of this application.

Next, a secondary battery and an electrical device according to this application are described below with due reference to drawings.

Unless otherwise specified, the battery components, material types, or content of constituents mentioned herein apply to both lithium-ion secondary batteries and sodium-ion secondary batteries.

In an embodiment of this application, a secondary battery is provided.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### Positive electrode plate

The positive electrode plate includes a positive current collector and a positive electrode film layer disposed on at least one surface of the positive current collector.

As a non-limiting example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be obtained by overlaying a polymer material substrate with a metal material. In the positive current collector, non-limiting examples of the metal material may include one or more of aluminum, aluminum alloy, nickel, nickel alloy, titanium, titanium alloy, silver, silver alloy, or the like. In the positive current collector, non-limiting examples of the polymer material substrate may include one or more of polypropylene (PP), polyethylene terephthalate (PET), polybutylene terephthalate (PBT), polystyrene (PS), polyethylene (PE), or the like.

In some embodiments, the positive active material may be a positive active material well-known in the art for use in a battery.

As non-limiting examples, the positive active material of the lithium-ion secondary battery may include one or more of the following materials: olivine-structured lithium-containing phosphate, lithium transition metal oxide, or a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, a modified compound thereof, or the like. Non-limiting examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon. Non-limiting examples of the lithium cobalt oxide may include LiCoO₂. Non-limiting examples of the lithium nickel oxide may include LiNiO₂. Non-limiting examples of the lithium manganese oxide may include LiMnO₂, LiMn₂O₄, and the like. Non-limiting examples of the lithium nickel cobalt manganese oxide may include LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), and the like. Non-limiting examples of the lithium nickel cobalt aluminum oxide may include LiNi_{0.85}Co_{0.1}Al_{0.05}O₂.

Understandably, the charge/discharge process of the battery is accompanied by deintercalation and depletion of lithium (Li). When the battery is discharged to each different state, the Li content in the positive electrode plate is different. Unless otherwise specified, in the enumeration of the positive electrode materials in this application, the content of Li is a value measured in an initial state of the material. When a positive electrode material is applied to a positive electrode plate in a battery system, the Li content in the positive electrode material contained in the electrode plate usually changes after being charged and discharged for a number of cycles. In this case, the Li content may be expressed by, but without being limited to, a molar fraction. In reference to "the Li content is a value measured in an initial state of the material", the initial state of the material means a state of the material before being fed into the positive electrode slurry. Understandably, a new material obtained by appropriately modifying the enumerated positive electrode materials also fall within the category of positive electrode materials, where the appropriate modification means acceptable modification performed on the positive electrode material. Non-limiting examples of the modification include coating modification.

In the enumeration of the positive electrode materials in this application, the content of oxygen (O) is merely a theoretical state value. The lattice structure of the material releases oxygen, and leads to a change in the molar fraction of oxygen. The actual oxygen content fluctuates. The O content may be expressed by, but without being limited to, a molar fraction.

As a non-limiting example, the positive active material of a sodium-ion secondary battery may include one or more of: a sodium transition metal oxide, a polyanionic compound, or a Prussian blue compound. However, this application is not limited to such materials, and other conventional well-known materials suitable for use as a positive active material of the sodium-ion battery may be used instead.

As an optional technical solution of this application, the transition metal in the sodium transition metal oxide may be one or more of Mn, Fe, Ni, Co, Cr, Cu, Ti, Zn, V, Zr, or Ce. The sodium transition metal oxide is, for example, NaₓMO₂, where M is one or more of Ti, V, Mn, Co, Ni, Fe, Cr, or Cu, and 0 < x ≤ 1.

As an optional technical solution of this application, the polyanionic compound may be a type of compound containing a sodium ion, a transition metal ion, and a tetrahedral (YO₄)ⁿ⁻ anion unit. The transition metal may be one or more of Mn, Fe, Ni, Co, Cr, Cu, Ti, Zn, V, Zr, or Ce; Y may be one or more of P, S, or Si; and n denotes a valence of (YO₄)ⁿ⁻.

Alternatively, the polyanionic compound may be a type of compound containing a sodium ion, a transition metal ion, a tetrahedral (YO₄)ⁿ⁻ anion unit, and a halogen anion. The transition metal may be one or more of Mn, Fe, Ni, Co, Cr, Cu, Ti, Zn, V, Zr, or Ce; Y may be one or more of P, S, or Si; n denotes a valence of (YO₄)ⁿ⁻; and the halogen may be one or more of F, Cl, or Br.

Alternatively, the polyanionic compound may be a type of compound containing a sodium ion, a tetrahedral (YO₄)ⁿ⁻ anion unit, a polyhedral unit (ZO_{y})^{m+}, and optionally a halogen anion. Y may be one or more of P, S, or Si; n denotes a valence of (YO₄)ⁿ⁻; Z denotes transition metal, and may be one or more of Mn, Fe, Ni, Co, Cr, Cu, Ti, Zn, V, Zr, or Ce; m denotes a valence of (ZO_{y})^{m+}; and the halogen may be one or more of F, Cl, or Br.

For example, the polyanionic compound is one or more of NaFePO₄, Na₃V₂(PO₄)₃ (sodium vanadium phosphate, NVP for short), Na₄Fe₃(PO₄)₂(P₂O₇), NaM'PO₄F (M' is one or more of V, Fe, Mn, or Ni), or Na₃(VO_{y})₂(PO₄)₂F_{3-2y}(0 ≤ y ≤ 1).

The Prussian blue compound may be a compound containing a sodium ion, a transition metal ion, or a cyano ion (CN). The transition metal may be one or more of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently one or more of Ni, Cu, Fe, Mn, Co, or Zn, 0 < a ≤ 2, 0 < b < 1, and 0 < c < 1.

A mass percent of the positive active material in the positive electrode film layer is 80 wt% to 100 wt% based on the total mass of the positive electrode film layer.

In some embodiments, the positive electrode film layer further optionally includes a binder. As a non-restrictive example, the binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin. A mass percent of the binder in the positive electrode film layer is 0 wt% to 20 wt% based on the total mass of the positive electrode film layer.

In some embodiments, the positive electrode film layer further optionally includes a conductive agent. As a non-restrictive example, the conductive agent may include one or more of superconductive carbon, acetylene black, carbon black, Ketjen black, carbon dots, carbon nanotubes, graphene, or carbon nanofibers. A mass percent of the conductive agent in the positive electrode film layer is 0 wt% to 20 wt% based on the total mass of the positive electrode film layer.

In some embodiments, the positive electrode plate may be prepared by the following method: dispersing the constituents of the positive electrode plate such as the positive active material, the conductive agent, the binder, and any other constituents into a solvent (such as N-methyl-pyrrolidone) to form a positive electrode slurry in which the solid content is 40 wt% to 80wt%; adjusting the viscosity of the slurry to 5000 mPa·s to 25000 mPa·s, and coating a surface of the positive current collector with the positive electrode slurry; oven-drying the slurry, cold-pressing the current collector with a cold-pressing machine to form a positive electrode plate, where a coating areal density of the positive electrode powder per unit area is 150 mg/m² to 350 mg/m², and the compaction density of the positive electrode plate is 3.0 g/cm³ to 3.6 g/cm³, and optionally 3.3 g/cm³ to 3.5 g/cm³.

The compaction density is calculated by the following formula: compaction density = coating areal density/(thickness of pressed electrode plate - thickness of current collector).

The mass M of the positive active material per unit area of the positive electrode film may be weighed out by using a standard balance.

The thickness T of the positive electrode film may be measured with a ten-thousandth micrometer, for example, a Mitutoyo 293-100 ten-thousandth micrometer with an accuracy of 0.1 µm. It is hereby noted that the thickness of the positive electrode film referred to herein means a thickness of a positive electrode film in a positive electrode plate compacted by cold-pressing and ready for assembling a battery.

### Negative electrode plate

The negative electrode plate includes a negative current collector and a negative electrode film layer disposed on at least one surface of the negative current collector. The negative electrode film layer includes a negative active material.

As a non-limiting example, the negative current collector includes two surfaces opposite to each other in a thickness direction of the negative current collector. The negative electrode film layer is disposed on either or both of the two opposite surfaces of the negative current collector.

In some embodiments, the negative current collector may be metal foil or a composite current collector. For example, the metal foil may be copper foil. The composite current collector may include a polymer material substrate and a metal layer formed on at least one surface of the polymer material substrate. The composite current collector may be obtained by overlaying a polymer material substrate with a metal material. In the negative current collector, non-restrictive examples of the metal material may include one or more of copper, copper alloy, nickel, nickel alloy, titanium, titanium alloy, silver, silver alloy, or the like. In the negative current collector, non-limiting examples of the polymer material substrate may include one or more of polypropylene (PP), polyethylene terephthalate (PET), polybutylene terephthalate (PBT), polystyrene (PS), polyethylene (PE), or the like.

In some embodiments, the negative active material may be a negative active material well-known in the art for use in a battery.

As non-limiting examples, the negative active materials of the lithium-ion secondary battery may include one or more of the following materials: artificial graphite, natural graphite, soft carbon, hard carbon, silicon-based material, tin-based material, lithium titanium oxide, or the like. The silicon-based material may include one or more of elemental silicon, a silicon oxide compound, silicon-carbon composite, silicon-nitrogen composite, or silicon alloy. The tin-based material may include one or more of elemental tin, tin oxide compound, or tin alloy. However, this application is not limited to such materials, and other conventional materials usable as a negative active material of a battery may be used instead. One of the negative active materials may be used alone, or at least two thereof may be used in combination.

As a non-limiting example, the negative active material of the sodium-ion secondary battery is typically a hard carbon material or a two-dimensional metal carbide or a nitride. Preferably, the negative active material of the sodium-ion secondary battery is typically a hard carbon material.

In some embodiments, the negative electrode film layer further optionally includes a binder. The binder may include one or more of styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments, the negative electrode film layer further optionally includes a conductive agent. The conductive agent may include one or more of superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (a non-restrictive example of the solvent is deionized water) to form a negative electrode slurry, coating at least one side of a negative current collector with the negative electrode slurry, and performing steps such as drying and cold-pressing to obtain a negative electrode plate. The negative electrode slurry may be applied on just a single surface of the negative current collector or on both surfaces of the negative current collector. The solid content of the negative electrode slurry may be 40 wt% to 60 wt%. The viscosity of the negative electrode slurry at room temperature may be adjusted to 2000 mPa·s to 10000 mPa·s. The coating areal density by dry weight (excluding the solvent) during coating of the negative electrode slurry may be 75 g/m² to 220 g/m². The compaction density of the negative electrode plate may be 1.0 g/cm³ to 1.8 g/cm³.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt of the lithium-ion secondary battery may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato) borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP).

In some embodiments, the solvent may include one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, the additive in the electrolyte solution may include, but is not limited to, one or more of fluoroethylene carbonate (FEC), difluoroethylene carbonate (DFEC), trifluoromethylethylene carbonate (TFPC), and the like.

### Separator

In some embodiments, the secondary battery further includes a separator. The type of the separator is not particularly limited in this application, and may be any well-known porous separator that is highly stable both chemically and mechanically.

In some embodiments, the material of the separator may include one or more of glass fibers, non-woven fabric, polyethylene, polypropylene, or polyvinylidene fluoride. The separator may be a single-layer film or a multilayer composite film, without being particularly limited. When the separator is a multilayer composite film, materials in different layers may be identical or different, without being particularly limited.

In some embodiments, the thickness of the separator is 6 µm to 40 µm, and optionally 12 µm to 20 µm.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic. Further, non-restrictive examples of the plastic may include one or more of polypropylene, polybutylene terephthalate, polybutylene succinate, or the like.

At least one battery cell is included in the secondary battery. The secondary battery may include 1 or more battery cells.

Unless otherwise specified, the term "battery cell" herein means a basic unit capable of implementing mutual conversion between chemical energy and electrical energy, and further, typically includes at least a positive electrode plate, a negative electrode plate, and an electrolyte. In a charge-and-discharge cycle of the battery, active ions are shuttled between the positive electrode plate and the negative electrode plate by intercalation and deintercalation. The electrolyte serves to conduct active ions between the positive electrode plate and the negative electrode plate.

The shape of the battery cell is not particularly limited in this application, and may be cylindrical, prismatic or in any other shape. For example, FIG. 5 shows a prismatic battery cell 5 as an example.

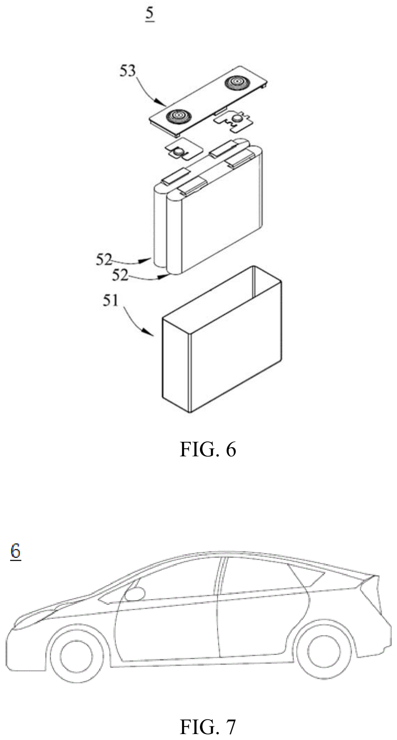

In some embodiments, referring to FIG. 6, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 included in a battery cell 5 may be one or more, and may be determined by a person skilled in the art as actually required.

In some embodiments, the battery cell 5 may be assembled into a battery module. The battery module may include one or more battery cells, and the specific number of battery cells 5 in a battery module may be selected by a person skilled in the art depending on the practical applications and capacity of the battery module.

In the battery module, a plurality of battery cells 5 may be arranged sequentially along a length direction of the battery module. Alternatively, the secondary batteries may be arranged in any other manner. Further, the plurality of battery cells 5 may be fixed by a fastener.

Optionally, the battery module may further include a shell that provides an accommodation space. The plurality of battery cells 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

The battery pack may contain a battery box and a plurality of battery modules disposed in the battery box. The battery box includes an upper box and a lower box. The upper box fits the lower box to form a closed space for accommodating the battery modules. The plurality of battery modules may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 7 shows an electrical device 6 as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following describes some embodiments of this application.

To clarify the technical problems to be solved by this application, technical solutions, and beneficial effects of this application more clearly, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

### 1) Preparing a positive electrode plate

Mixing lithium iron phosphate (LiFePO₄), lithium iron phosphate with a surface coated with an aluminum oxide passivation layer (LiFePO₄), carbon black as a conductive agent, and polyvinylidene difluoride (PVDF) as a binder at a mass ratio of 71.8: 25.2: 0.8: 2.2 in an NMP solvent, and stirring well to obtain a positive electrode slurry; coating a positive current collector aluminum foil with the positive electrode slurry evenly; and performing oven-drying, cold-pressing, and slitting to obtain a positive electrode plate.

The first-cycle gravimetric discharge capacity C₁ of the lithium iron phosphate in use is 156 mAh/g, and the first-cycle gravimetric discharge capacity C₂ of the lithium iron phosphate with a surface coated with an aluminum oxide passivation layer is 120 mAh/g; and k = 0.94. Because both the second positive active material and the first positive active material before passivation are lithium iron phosphate (LiFePO₄), the difference of discharge potential between the lithium iron phosphate and a lithium metal electrode at a discharge current of 0.33C and a temperature of 25 °C is 0. The average particle diameter Dᵥ₅₀ of the lithium iron phosphate is 1.5 µm. The thickness of the passivation layer is 5 nm. Because the thickness of the passivation layer is tiny, the average particle diameter Dᵥ₅₀ of the lithium iron phosphate material with a surface coated with an aluminum oxide passivation layer may be considered to be substantially unchanged, that is, 1.5 µm.

### 2) Preparing a negative electrode plate

Dissolving artificial graphite as a negative active material, carbon black as a conductive agent, styrene-butadiene rubber (SBR) as a binder, sodium carboxymethyl cellulose (CMC) as a thickener at a mass ratio of 96.9: 0.4: 1.5: 1.2 in a deionized water solvent, and stirring well to form a negative electrode slurry. Applying the negative electrode slurry onto a negative current collector copper foil evenly, and performing oven-drying, cold-pressing, and slitting to obtain a negative electrode plate.

### 3) Preparing an electrolyte solution

Mixing ethylene carbonate (EC) and ethyl methyl carbonate (EMC) well at a volume ratio of 3: 7 in an argon atmosphere glovebox (in which the concentration of H₂O is less than 0.1 ppm and the concentration of O₂ is less than 0.1 ppm) to form an organic solvent, and adding and dissolving a LiPF₆ lithium salt in the organic solvent, where the mass fraction of the lithium salt is 12.5 wt% based on the mass of the electrolyte solution. Stirring well to obtain the electrolyte solution.

### 4) Separator

Using a polyethylene film as a separator.

### 5) Assembling a battery

Stacking the positive electrode plate, the separator, and the negative electrode plate sequentially in such a way that the separator is located between the positive electrode plate and the negative electrode plate to serve a function of separation, and then winding the stacked structure to obtain a bare cell. Welding tabs onto the bare cell, and putting the bare cell into an aluminum shell. Dehydrating the cell by drying the cell at 80 °C, and then injecting an electrolyte solution into the aluminum shell package and sealing the package to obtain an uncharged battery. Performing steps such as static standing, hot- and cold-pressing, chemical formation, shaping, and capacity test on the uncharged cell to obtain a lithium-ion secondary battery.

### Embodiment 2

This embodiment is substantially identical to Embodiment 1 except that: the mass ratio between the lithium iron phosphate, the lithium iron phosphate with a surface coated with an aluminum oxide passivation layer, the carbon black as a conductive agent, and the polyvinylidene difluoride (PVDF) as a binder in the positive electrode slurry is 34: 63: 0.8: 2.2, and k = 0.85.

### Embodiment 3

This embodiment is substantially identical to Embodiment 1 except that: the mass ratio between the lithium iron phosphate, the lithium iron phosphate with a surface coated with an aluminum oxide passivation layer, the carbon black as a conductive agent, and the polyvinylidene difluoride as a binder in the positive electrode slurry is 12.9: 84.1: 0.8: 2.2, and k = 0.80.

### Embodiment 4

This embodiment is substantially identical to Embodiment 1 except that: the mass ratio between the lithium iron phosphate, the lithium iron phosphate with a surface coated with an aluminum oxide passivation layer, the carbon black as a conductive agent, and the polyvinylidene difluoride as a binder in the positive electrode slurry is 84.4: 12.6: 0.8: 2.2, and k = 0.97.

### Embodiment 5

This embodiment is substantially identical to Embodiment 1 except that: lithium nickel cobalt manganese oxide (LiNi_{0.5}Co_{0.2}Mn_{0.3}O₂) is used instead of the lithium iron phosphate in Embodiment 1; the lithium nickel cobalt manganese oxide (LiNi_{0.5}Co_{0.2}Mn_{0.3}O₂) with a surface coated with an aluminum oxide passivation layer is used instead of the lithium iron phosphate with a surface coated with an aluminum oxide passivation layer in Embodiment 1; the first-cycle gravimetric discharge capacity C₁ of the lithium nickel cobalt manganese oxide in use is 174 mAh/g, and the first-cycle gravimetric discharge capacity C₂ of the lithium nickel cobalt manganese oxide with a surface coated with an aluminum oxide passivation layer in use is 145 mAh/g; and k = 0.96.

### Embodiment 6

This embodiment is substantially identical to Embodiment 1 except that: lithium nickel cobalt manganese oxide (LiNi_{0.5}Co_{0.2}Mn_{0.3}O₂) is used instead of the lithium iron phosphate in Embodiment 1; the lithium manganese iron phosphate (LiFe_{0.6}Mn_{0.4}PO₄) with a surface coated with an aluminum oxide passivation layer is used instead of the lithium iron phosphate with a surface coated with an aluminum oxide passivation layer in Embodiment 1; the first-cycle gravimetric discharge capacity C₁ of the lithium nickel cobalt manganese oxide in use is greater than the first-cycle gravimetric discharge capacity C₂ of the lithium manganese iron phosphate with a surface coated with an aluminum oxide passivation layer in use; and k = 0.96.

### Embodiment 7

This embodiment is substantially identical to Embodiment 1 except that: lithium iron phosphate with a surface coated with a titanium nitride passivation layer is used instead of the lithium iron phosphate with a surface coated with an aluminum oxide passivation layer in Embodiment 1; the first-cycle gravimetric discharge capacity C₂ of the lithium iron phosphate with a surface coated with a titanium nitride passivation layer is 122 mAh/g; and k = 0.94.

### Embodiment 8

This embodiment is substantially identical to Embodiment 1 except that: lithium iron phosphate with a surface coated with a zirconium oxide passivation layer is used instead of the lithium iron phosphate with a surface coated with an aluminum oxide passivation layer in Embodiment 1; the first-cycle gravimetric discharge capacity C₂ of the lithium iron phosphate with a surface coated with a zirconium oxide passivation layer is 121 mAh/g; and k = 0.94.

### Embodiment 9

This embodiment is substantially identical to Embodiment 1 except that: in the lithium iron phosphate with a surface coated with an aluminum oxide passivation layer, the thickness of the aluminum oxide passivation layer on the surface of the lithium iron phosphate is 1 nm; the first-cycle gravimetric discharge capacity C₂ of the lithium iron phosphate with a surface coated with an aluminum oxide passivation layer is 145 mAh/g; and k = 0.98.

### Embodiment 10

This embodiment is substantially identical to Embodiment 1 except that: in the lithium iron phosphate with a surface coated with an aluminum oxide passivation layer, the thickness of the aluminum oxide passivation layer on the surface of the lithium iron phosphate is 3 nm; the first-cycle gravimetric discharge capacity C₂ of the lithium iron phosphate with a surface coated with an aluminum oxide passivation layer is 134 mAh/g; and k = 0.96.

### Embodiment 11

This embodiment is substantially identical to Embodiment 1 except that: in the lithium iron phosphate with a surface coated with an aluminum oxide passivation layer, the thickness of the aluminum oxide passivation layer on the surface of the lithium iron phosphate is 10 nm; the first-cycle gravimetric discharge capacity C₂ of the lithium iron phosphate with a surface coated with an aluminum oxide passivation layer is 96 mAh/g; and k = 0.9.

### Embodiment 12

This embodiment is substantially identical to Embodiment 1 except that: in the lithium iron phosphate with a surface coated with an aluminum oxide passivation layer, the thickness of the aluminum oxide passivation layer on the surface of the lithium iron phosphate is 25 nm; the first-cycle gravimetric discharge capacity C₂ of the lithium iron phosphate with a surface coated with an aluminum oxide passivation layer is 72 mAh/g; and k = 0.86.

### Embodiment 13

This embodiment is substantially identical to Embodiment 1 except that: in the lithium iron phosphate with a surface coated with an aluminum oxide passivation layer, the thickness of the aluminum oxide passivation layer on the surface of the lithium iron phosphate is 50 nm; the first-cycle gravimetric discharge capacity C₂ of the lithium iron phosphate with a surface coated with an aluminum oxide passivation layer is 38 mAh/g; and k = 0.8.

### Embodiment 14

This embodiment is substantially identical to Embodiment 1 except that: large-grained lithium iron phosphate (LiFePO₄) is used in the positive electrode slurry instead of the lithium iron phosphate (LiFePO₄) with a surface coated with an aluminum oxide passivation layer in Embodiment 1; the average particle diameter Dᵥ₅₀ of the large-grained lithium iron phosphate is 6.2 µm; the mass ratio between the small-grained lithium iron phosphate, the large-grained lithium iron phosphate, the carbon black as a conductive agent, and the polyvinylidene difluoride as a binder in the positive electrode slurry is 73.7: 23.3: 0.8: 2.2; the first-cycle gravimetric discharge capacity C₂ of the large-grained lithium iron phosphate is 117 mAh/g; and k = 0.94.

### Embodiment 15

This embodiment is substantially identical to Embodiment 14 except that: the average particle diameter Dᵥ₅₀ of large-grained lithium iron phosphate is 1.5 µm, and the average particle diameter Dᵥ₅₀ of the corresponding small-grained lithium iron phosphate is 0.5 µm; the first-cycle gravimetric discharge capacity C₁ of small-grained lithium iron phosphate is 160 mAh/g, and the first-cycle gravimetric discharge capacity C₂ of large-grained lithium iron phosphate is 156 mAh/g; and k = 0.99.

### Embodiment 16

This embodiment is substantially identical to Embodiment 14 except that: the average particle diameter Dᵥ₅₀ of the large-grained lithium iron phosphate is 9 µm, and the average particle diameter Dᵥ₅₀ of the corresponding small-grained lithium iron phosphate is 3 µm; the first-cycle gravimetric discharge capacity C₁ of the small-grained lithium iron phosphate is 154 mAh/g, and the first-cycle gravimetric discharge capacity C₂ of the large-grained lithium iron phosphate is 130 mAh/g; and k = 0.96.

### Embodiment 17

This embodiment is substantially identical to Embodiment 1 except that: in the positive electrode slurry, a small-grained nickel-cobalt-manganese ternary material (LiNi_{0.5}Co_{0.2}Mn_{0.3}O₂) that is morphologically single crystal particles is used instead of the lithium iron phosphate in Embodiment 1; a large-grained nickel-cobalt-manganese ternary material (LiNi_{0.5}Co_{0.2}Mn_{0.3}O₂) that is morphologically single crystal particles is used instead of the lithium iron phosphate with a surface coated with an aluminum oxide passivation layer in Embodiment 1; the average particle diameter Dᵥ₅₀ of the small-grained nickel-cobalt-manganese ternary material is 3 µm, and the average particle diameter Dᵥ₅₀ of the large-grained nickel-cobalt-manganese ternary material is 9 µm; the first-cycle gravimetric discharge capacity C₁ of the small-grained nickel-cobalt-manganese ternary material is 182 mAh/g, and the first-cycle gravimetric discharge capacity C₂ of the large-grained nickel-cobalt-manganese ternary material is 165 mAh/g; and k = 0.98.

### Embodiment 18

This embodiment is substantially identical to Embodiment 17 except that: the average particle diameter Dᵥ₅₀ of the small-grained nickel-cobalt-manganese ternary material (LiNi_{0.5}Co_{0.2}Mn_{0.3}O₂) is 7 µm, and the average particle diameter Dᵥ₅₀ of the large-grained nickel-cobalt-manganese ternary material (LiNi_{0.5}Co_{0.2}Mn_{0.3}O₂) is 21 µm; the first-cycle gravimetric discharge capacity C₁ of the small-grained nickel-cobalt-manganese ternary material is 174 mAh/g, and the first-cycle gravimetric discharge capacity C₂ of the large-grained nickel-cobalt-manganese ternary material is 146 mAh/g; and k = 0.96.

### Embodiment 19

This embodiment is substantially identical to Embodiment 1 except that: in the positive electrode slurry, a small-grained nickel-cobalt-manganese ternary material (LiNi_{0.5}Co_{0.2}Mn_{0.3}O₂) that is morphologically polycrystalline particles is used instead of the lithium iron phosphate in Embodiment 1; a large-grained nickel-cobalt-manganese ternary material (LiNi_{0.5}Co_{0.2}Mn_{0.3}O₂) that is morphologically polycrystalline particles is used instead of the lithium iron phosphate with a surface coated with an aluminum oxide passivation layer in Embodiment 1; the average particle diameter Dᵥ₅₀ of the small-grained nickel-cobalt-manganese ternary material is 8 µm, and the average particle diameter Dᵥ₅₀ of the large-grained nickel-cobalt-manganese ternary material is 20 µm; the first-cycle gravimetric discharge capacity C₁ of the small-grained nickel-cobalt-manganese ternary material is 170 mAh/g, and the first-cycle gravimetric discharge capacity C₂ of the large-grained nickel-cobalt-manganese ternary material is 148 mAh/g; and k = 0.96.

### Embodiment 20

This embodiment is substantially identical to Embodiment 19 except that: the average particle diameter Dᵥ₅₀ of the small-grained nickel-cobalt-manganese ternary material (LiNi_{0.5}Co_{0.2}Mn_{0.3}O₂) is 20 µm, and the average particle diameter Dᵥ₅₀ of the large-grained nickel-cobalt-manganese ternary material (LiNi_{0.5}Co_{0.2}Mn_{0.3}O₂) is 40 µm; the first-cycle gravimetric discharge capacity C₁ of the small-grained nickel-cobalt-manganese ternary material is 148 mAh/g, and the first-cycle gravimetric discharge capacity C₂ of the large-grained nickel-cobalt-manganese ternary material is 120 mAh/g; and k = 0.95.

### Embodiment 21

### 1) Preparing a positive electrode plate

Mixing lithium iron phosphate (LiFePO₄), carbon black as a conductive agent, and polyvinylidene difluoride as a binder at a mass ratio of 97: 0.8: 2.2 in an NMP solvent, and stirring well to obtain a positive electrode slurry I; mixing lithium iron phosphate (LiFePO₄) coated with an aluminum oxide passivation layer on the surface, carbon black as a conductive agent, and polyvinylidene difluoride as a binder at a mass ratio of 97: 0.8: 2.2 in an NMP solvent, and stirring well to obtain a positive electrode slurry II; coating a positive current collector aluminum foil with the positive electrode slurry I evenly, and oven-drying the slurry, and then coating the positive electrode slurry I with the positive electrode slurry II evenly; and performing oven-drying, cold-pressing, and slitting to obtain a positive electrode plate containing a positive active material layer that includes two active material layers stacked up.

The mass fraction of the lithium iron phosphate and the mass fraction of the lithium iron phosphate coated with an aluminum oxide passivation layer on the surface are the same as those in Embodiment 1.

The steps of: 2) preparing a negative electrode plate; 3) preparing an electrolyte solution; 4) separator; and 5) assembling a battery, are the same as those in Embodiment 1.

### Comparative Embodiment 1

This comparative embodiment is substantially identical to Embodiment 1 except that: the positive electrode slurry contains no lithium iron phosphate material with a surface coated with an aluminum oxide passivation layer, and all the lithium iron phosphate material with a surface coated with an aluminum oxide passivation layer in Embodiment 1 is replaced by lithium iron phosphate.

### Comparative Embodiment 2

This comparative embodiment is substantially identical to Embodiment 18 except that: the positive electrode slurry contains no large-grained nickel-cobalt-manganese ternary material (LiNi_{0.5}Co_{0.2}Mn_{0.3}O₂) with an average particle diameter Dᵥ₅₀ being 21 µm; and the positive active material is entirely small-grained nickel-cobalt-manganese ternary material (LiNi_{0.5}Co_{0.2}Mn_{0.3}O₂) with an average particle diameter Dᵥ₅₀ being 7 µm.

### Test methods

### 1. Testing the volume median diameter Dᵥ₅₀

Equipment model: Malvern 2000 (MasterSizer 2000) laser particle size analyzer; reference standard: GB/T19077-2016/ISO 13320:2009.

Test process: Taking an appropriate amount of particle specimen (the concentration of the specimen needs to ensure that the level of obscuration is 8% to 12%); adding 20 mL of NMP, sonicating the solution externally for 5 minutes at a sonication frequency of 53 KHz and a sonication power of 120 W to ensure thorough dispersion of the specimen, and then measuring the specimen with reference to the standard GB/T19077-2016/ISO 13320: 2009.

### 2. Measuring the thickness of a coating passivation layer

Cutting an electrode plate into a specimen of 6 cm × 6 cm in size by using scissors, and then polishing the electrode plate specimen by using an IB-19500CP ion cross-section polisher, so as to obtain a polished specimen with a cutting face. Subsequently, testing the specimen by use of a ZEISS sigma 300 instrument with reference to the standard JY/T010-1996. Selecting 10 positions in the specimen randomly for testing, and identifying the coating elements by energy dispersive spectroscopy EDS.

### 3. Testing the content of a positive active material

Taking a specimen of 5 cm × 5 cm in size from an electrode plate, and scraping off the powder from a substrate of the electrode plate without leaking the substrate. Performing a thermogravimetric analysis on the scraped powder in a gas atmosphere environment, increasing the temperature at a heating rate of 5 °C/min, and keeping the temperature within a range of 25 °C to 600 °C. The mass percent of the remainder is the mass percent of the active material.

### 4. Testing the first-cycle gravimetric discharge capacity of the positive active material

Die-cutting an electrode plate into 14 mm-diameter discs. Assembling a coin cell by using the disc together with a separator, a lithium sheet, and an electrolyte solution. Charging and discharging the coin cell for one cycle at normal temperature at a charge rate of 0.1C and a discharge rate of 0.1C within an appropriate voltage range (the voltage range is 2.5 V to 3.65 V for LFP, and the voltage range is 2.8 V to 4.25 V for NCM). First-cycle gravimetric discharge capacity = discharge capacity/mass of active material.

### 5. Testing the capacity retention rate of a battery

Charging a battery at a constant current of 1/3C under a 25 °C temperature until the voltage reaches 3.65 V, and then charging the battery at a constant voltage of 3.65 V until the current reaches 0.05C. Leaving the battery to stand for 5 minutes, and then discharging the battery at a current of 1/3C until the voltage reaches 2.5 V. Recording the capacity at this time as an initial capacity C₀. Repeating the above steps for the same battery, and recording the discharge capacity Cₙ of the battery at the end of the n^{th} cycle. Calculating the capacity retention rate of the battery at the end of each cycle as: Pₙ = Cₙ/C₀ × 100%.

### 6. Testing the direct-current resistance of a battery

Charging a battery at a constant current of 1/3C at 25 °C until the voltage reaches 3.65 V, and then charging the battery at a constant voltage of 3.65V until the current drops to 0.05C. Leaving the battery to stand for 5 minutes, and then discharging the battery at a constant current of 1/3C for 90 minutes, leaving the battery to stand for 120 minutes, and then recording the voltage V₁. Subsequently, discharging the battery at a current of 4C for 30 seconds, and recording the voltage V₂. Calculating the internal resistance DCR of the battery as: DCR = (V₂ - V₁)/4C.

The parameters of the batteries in the above embodiments and comparative embodiments are shown in Table 1, and the performance test data is shown in Table 2. In the tables, D₁ represents the average particle diameter Dᵥ₅₀ of the first positive active material, and D₂ represents the average particle diameter Dᵥ₅₀ of the second positive active material.

**Table 1**

| Item | First positive active material | W₁ (wt%) | D₁ (µm) | Passivation layer and thickness (nm) | Coating method | Second positive active material | W₂ (wt%) | D₂ (µm) | k |
|---|---|---|---|---|---|---|---|---|---|
| Embodiment 1 | LiFePO₄ | 71.8 | 1.5 | Aluminum oxide; 5 | Single layer | Coated LiFePO₄ | 25.2 | 1.5 | 0.94 |
| Embodiment 2 | LiFePO₄ | 34 | 1.5 | Aluminum oxide; 5 | Single layer | Coated LiFePO₄ | 63 | 1.5 | 0.85 |
| Embodiment 3 | LiFePO₄ | 12.9 | 1.5 | Aluminum oxide; 5 | Single layer | Coated LiFePO₄ | 84.1 | 1.5 | 0.8 |
| Embodiment 4 | LiFePO₄ | 84.4 | 1.5 | Aluminum oxide; 5 | Single layer | Coated LiFePO₄ | 12.6 | 1.5 | 0.97 |
| Embodiment 5 | LiNi_{0.5}Co_{0.2}Mn_{0.3}O₂ | 71.8 | 1.5 | Aluminum oxide; 5 | Single layer | Coated LiNi_{0.5}Co_{0.2}Mn_{0.3}O₂ | 71.8 | 1.5 | 0.96 |
| Embodiment 6 | LiNi_{0.5}Co_{0.2}Mn_{0.3}O₂ | 71.8 | 1.5 | Aluminum oxide; 5 | Single layer | Coated LiFe_{0.6}Mn_{0.4}PO₄ | 71.8 | 1.5 | 0.96 |
| Embodiment 7 | LiFePO₄ | 71.8 | 1.5 | Titanium nitride; 5 | Single layer | Coated LiFePO₄ | 25.2 | 1.5 | 0.94 |
| Embodiment 8 | LiFePO₄ | 71.8 | 1.5 | Zirconium oxide; 5 | Single layer | Coated LiFePO₄ | 25.2 | 1.5 | 0.94 |
| Embodiment 9 | LiFePO₄ | 71.8 | 1.5 | Aluminum oxide; 1 | Single layer | Coated LiFePO₄ | 25.2 | 1.5 | 0.98 |
| Embodiment 10 | LiFePO₄ | 71.8 | 1.5 | Aluminum oxide; 3 | Single layer | Coated LiFePO₄ | 25.2 | 1.5 | 0.96 |
| Embodiment 11 | LiFePO₄ | 71.8 | 1.5 | Aluminum oxide; 10 | Single layer | Coated LiFePO₄ | 25.2 | 1.5 | 0.9 |
| Embodiment 12 | LiFePO₄ | 71.8 | 1.5 | Aluminum oxide; 25 | Single layer | Coated LiFePO₄ | 25.2 | 1.5 | 0.86 |
| Embodiment 13 | LiFePO₄ | 71.8 | 1.5 | Aluminum oxide; 50 | Single layer | Coated LiFePO₄ | 25.2 | 1.5 | 0.8 |
| Embodiment 14 | Small-grained LiFePO₄ | 73.7 | 1.5 | / | Single layer | Large-grained LiFePO₄ | 24.3 | 6.2 | 0.94 |
| Embodiment 15 | Small-grained LiFePO₄ | 73.7 | 0.5 | / | Single layer | Large-grained LiFePO₄ | 24.3 | 1.5 | 0.99 |
| Embodiment 16 | Small-grained LiFePO₄ | 73.7 | 3 | / | Single layer | Large-grained LiFePO₄ | 24.3 | 9 | 0.96 |
| Embodiment 17 | Small-grained single-crystal LiNi_{0.5}Co_{0.2}Mn_{0.3}O₂ | 71.8 | 3 | / | Single layer | Large-grained single-crystal LiNi_{0.5}Co_{0.2}Mn_{0.3}O₂ | 25.2 | 9 | 0.98 |
| Embodiment 18 | Small-grained single-crystal LiNi_{0.5}Co_{0.2}Mn_{0.3}O₂ | 71.8 | 7 | / | Single layer | Large-grained single-crystal LiNi_{0.5}Co_{0.2}Mn_{0.3}O₂ | 25.2 | 21 | 0.96 |
| Embodiment 19 | Small-grained polycrystalline LiNi_{0.5}Co_{0.2}Mn_{0.3}O₂ | 71.8 | 8 | / | Single layer | Large-grained polycrystalline LiNi_{0.5}Co_{0.2}Mn_{0.3}O₂ | 25.2 | 20 | 0.96 |
| Embodiment 20 | Small-grained polycrystalline LiNi_{0.5}Co_{0.2}Mn_{0.3}O₂ | 71.8 | 20 | / | Single layer | Large-grained polycrystalline LiNi_{0.5}Co_{0.2}Mn_{0.3}O₂ | 25.2 | 40 | 0.95 |
| Embodiment 21 | LiFePO₄ | 71.8 | 1.5 | Aluminum oxide; 5 | Double layer | Coated LiFePO₄ | 25.2 | 1.5 | 0.94 |
| Comparative Embodiment 1 | LiFePO₄ | 97 | 1.5 | / | Single layer | / | / | / | 1 |
| Comparative Embodiment 2 | LiNi_{0.5}Co_{0.2}Mn_{0.3}O₂ | 97 | 7 | / | Single layer | / | / | / | 1 |

**Table 2**

| Item | 1000^{th}-cycle capacity retention rate (%) | DCR (mΩ) |
|---|---|---|
| Embodiment 1 | 97.9 | 123 |
| Embodiment 2 | 98.2 | 346 |
| Embodiment 3 | 98.2 | 419 |
| Embodiment 4 | 95.4 | 120 |
| Embodiment 5 | 94 | 211 |
| Embodiment 6 | 92.5 | 276 |
| Embodiment 7 | 97.4 | 118 |
| Embodiment 8 | 97.8 | 122 |
| Embodiment 9 | 94.7 | 119 |
| Embodiment 10 | 96.3 | 121 |
| Embodiment 11 | 98.1 | 157 |
| Embodiment 12 | 98.2 | 305 |
| Embodiment 13 | 96.5 | 512 |
| Embodiment 14 | 97.4 | 148 |
| Embodiment 15 | 93.7 | 108 |
| Embodiment 16 | 96.8 | 197 |
| Embodiment 17 | 91.2 | 215 |
| Embodiment 18 | 93.5 | 217 |
| Embodiment 19 | 93.3 | 217 |
| Embodiment 20 | 90.8 | 458 |
| Embodiment 21 | 98 | 111 |
| Comparative Embodiment 1 | 92.1 | 119 |
| Comparative Embodiment 2 | 89.5 | 210 |

As can be seen from Table 1 and Table 2, the secondary batteries in the above embodiments of this application exhibit a relatively high cycle capacity retention rate, indicating that the cycle life of the secondary batteries is relatively high.

In Comparative Embodiment 1, the positive active material is entirely lithium iron phosphate coated with no passivation layer, without mixing large and small particles together. The cycle capacity retention rate of the secondary battery is significantly lower than that of the secondary batteries in the embodiments that also use lithium iron phosphate as a positive active material. Similarly, in Comparative Embodiment 2, the positive active material is entirely a nickel-cobalt-manganese ternary material coated with no passivation layer, without mixing large and small particles together. The cycle capacity retention rate of the secondary battery is significantly lower than that of the secondary batteries in the embodiments that also use the nickel-cobalt-manganese ternary material as a positive active material.

The above description of various embodiments tends to focus on the differences between the embodiments. The same or similar content in one embodiment may be learned by referring to another embodiment, and for brevity, is not repeated herein.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A positive electrode plate, comprising a positive active material layer, wherein the positive active material layer comprises a first positive active material and a second positive active material, and the first positive active material and the second positive active material each independently comprise a lithium-containing transition metal oxide;
an outer surface of the second positive active material comprises a passivation layer; and/or
an average particle diameter Dᵥ₅₀ of the second positive active material is greater than an average particle diameter Dᵥ₅₀ of the first positive active material.

2. The positive electrode plate according to claim 1, wherein the first positive active material and the second positive active material each independently comprise one or more of lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide.

3. The positive electrode plate according to claim 1 or 2, wherein the first positive active material and the second positive active material each are one or more selected from lithium iron phosphate, lithium manganese phosphate, lithium manganese iron phosphate, lithium cobalt phosphate, lithium nickel cobalt manganese oxide, lithium nickel cobalt aluminum oxide, lithium manganese oxide, lithium nickel manganese oxide, lithium-rich lithium manganese oxide, or lithium cobalt oxide.

4. The positive electrode plate according to any one of claims 1 to 3, wherein the passivation layer comprises one or more of an oxide passivation layer or a nitride passivation layer.

5. The positive electrode plate according to any one of claims 1 to 4, wherein the passivation layer comprises one or more of an aluminum oxide layer, a zirconium oxide layer, a titanium oxide layer, or a titanium nitride layer.

6. The positive electrode plate according to any one of claims 1 to 5, wherein a thickness of the passivation layer is 1 nm to 50 nm.

7. The positive electrode plate according to any one of claims 1 to 6, wherein a thickness of the passivation layer is 3 nm to 10 nm.

8. The positive electrode plate according to any one of claims 1 to 7, wherein a ratio of the average particle diameter Dᵥ₅₀ of the second positive active material to the average particle diameter Dᵥ₅₀ of the first positive active material is 2 to 18.

9. The positive electrode plate according to any one of claims 1 to 8, wherein both the first positive active material and the second positive active material are lithium iron phosphate, the average particle diameter Dᵥ₅₀ of the first positive active material is 0.5 µm to 3 µm, and the average particle diameter Dᵥ₅₀ of the second positive active material is 1.5 µm to 9 µm.

10. The positive electrode plate according to any one of claims 1 to 8, wherein both the first positive active material and the second positive active material are a nickel-cobalt-manganese ternary material that is morphologically single crystal particles, the average particle diameter Dᵥ₅₀ of the first positive active material is 3 µm to 7 µm, and the average particle diameter Dᵥ₅₀ of the second positive active material is 9 µm to 21 µm.

11. The positive electrode plate according to any one of claims 1 to 8, wherein both the first positive active material and the second positive active material are a nickel-cobalt-manganese ternary material that is morphologically polycrystalline particles, the average particle diameter Dᵥ₅₀ of the first positive active material is 8 µm to 20 µm, and the average particle diameter Dᵥ₅₀ of the second positive active material is 20 µm to 40 µm.

12. The positive electrode plate according to any one of claims 1 to 11, wherein a first-cycle gravimetric discharge capacity of the first positive active material is C₁, and a first-cycle gravimetric discharge capacity of the second positive active material is C₂; based on a total mass of the positive active material layer, a mass fraction of the first positive active material is W₁, and a mass fraction of the second positive active material is W₂; and the positive electrode plate satisfies: C₁ × W₁ + C₂ × W₂ = k × C₁ × (W₁ + W₂), wherein 0.8 ≤ k < 1.

13. The positive electrode plate according to claim 12, wherein 0.9 ≤ k ≤ 0.97.

14. The positive electrode plate according to claim 12, wherein 12% ≤ W₁ < 100%, and 0% < W₂ ≤ 85%.

15. The positive electrode plate according to claim 14, wherein 60% ≤ W₁ < 100%, and 0% < W₂ ≤ 40%.

16. The positive electrode plate according to any one of claims 1 to 15, wherein the positive active material layer comprises the first positive active material and the second positive active material mixed with each other.

17. The positive electrode plate according to any one of claims 1 to 15, wherein the positive active material layer comprises a first positive active material layer and a second positive active material layer stacked together, the first positive active material layer comprises the first positive active material, and the second positive active material layer comprises the second positive active material.

18. A secondary battery, comprising the positive electrode plate according to any one of claims 1 to 17.

19. An electrical device, comprising the secondary battery according to claim 18.
